(19) Europäisches Patentamt
European Patent Office
Office européen des brevets

(11) EP 0 711 780 B1

(12) **EUROPÄISCHE PATENTSCHRIFT**

(45) Veröffentlichungstag und Bekanntmachung des Hinweises auf die Patenterteilung:
**05.01.2000 Patentblatt 2000/01**

(21) Anmeldenummer: **95117650.2**

(22) Anmeldetag: **09.11.1995**

(51) Int Cl.[7]: **C07F 7/21**, C07F 7/08, C08G 77/38, C09K 19/38, C09K 19/40, G02F 1/13, G01N 30/48

(54) **Verfahren zur Herstellung (Meth)acryloxygruppen enthaltender flüssigkristalliner Polyorganosiloxane**

Process for the preparation of liquid crystalline polyorganosiloxanes containing (meth-)acryloxy groups

Procédé de préparation de polyorganosiloxanes liquides cristallines contenant des groupements (méth-)acryloxiques

(84) Benannte Vertragsstaaten:
**BE DE FR GB NL**

(30) Priorität: **10.11.1994 DE 4440209**

(43) Veröffentlichungstag der Anmeldung:
**15.05.1996 Patentblatt 1996/20**

(73) Patentinhaber: **Consortium für elektrochemische Industrie GmbH
81379 München (DE)**

(72) Erfinder:
- **Stohrer, Jürgen, Dr.
D-81479 München (DE)**
- **Kreuzer, Franz-Heinrich, Dr.
D-82152 Martinsried (DE)**
- **Luckas, Hans-Joachim
D-81377 München (DE)**

(74) Vertreter: **Fritz, Helmut, Dr. et al
Wacker-Chemie GmbH,
Zentralabteilung Patente,
Marken und Lizenzen,
Hanns-Seidel-Platz 4
81737 München (DE)**

(56) Entgegenhaltungen:
**EP-A- 0 562 584** **US-A- 5 211 877**

EP 0 711 780 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft die Herstellung von Acryloxy- und/oder Methacryloxygruppen enthaltenden flüssigkristallinen Polyorganosiloxanen und die Vernetzung dieser flüssigkristallinen Polyorganosiloxane.

Methacryloxy- und/oder Acryloxygruppen werden in flüssigkristalline Polyorganosiloxane eingeführt, damit letztere vernetzt werden können. Diese Vernetzung kann beispielsweise durch radikalische oder ionische Reaktion an den ethylenischen Doppelbindungen der (Meth)acryloxygruppen stattfinden. Um ein hochgradig dreidimensional vernetztes flüssigkristallines Polyorganosiloxan zu erhalten, ist es deshalb wünschenswert, einen möglichst hohen Anteil an (Meth)acryloxygruppen in das Polyorganosiloxan einzuführen. Werden jedoch gemäß US-A-4,388,453 flüssigkristalline Polyorganosiloxane mit hohem Gehalt an (Meth)acryloxygruppen hergestellt, so lassen sich mit diesen Materialien nach deren Orientierung nur trübe und rauhe Filme herstellen. Die Verwendung der dort angeführten nichtmesogenen bifunktionellen Monomere, wie (Meth)acrylsäureallylester ergibt zudem Materialien mit geringer Phasenbreite und sehr schlechter Orientierbarkeit. Ferner verbleiben in diesen Materialien nicht umgesetzte Monomere ohne (Meth) acryloxygruppen, die nicht in das dreidimensionale Netzwerk eingebaut werden können und die Eigenschaften der Netzwerke beeinträchtigen.

Werden nach dem in der US-A-5,211,877 beschriebenen Verfahren flüssigkristalline Polyorganosiloxane mit hohem Gehalt an (Meth)acryloxygruppen hergestellt, so können mit diesen Materialien Filme mit verbesserter, jedoch noch unbefriedigender Transparenz hergestellt werden. Zudem ist gemäß US-A-5,211,877 der aufwendige Einsatz von Schutzgruppen erforderlich. Ferner ist die vollständige Abtrennung von überschüssiger (Meth)acrylsäure und/oder deren Derivate nach dem in US-A-5,211,877 beschriebenen Verfahren nicht bzw. nur mit großem zusätzlichen Aufwand zu erzielen, so daß die nach US-A-5,211,877 erhaltenen Materialien eine intensive Geruchsbelästigung bewirken und leicht vorzeitig polymerisieren.

Aufgabe der Erfindung war es, ein Verfahren zur Herstellung von methacryl- und/oder acryloxyfunktionellen flüssigkristallinen Polyorganosiloxanen und diese enthaltenden Zusammensetzungen bereitzustellen, die auch bei einem hohen Anteil an (Meth)acryloxygruppen nicht trübe und ohne merklichen Geruch sowie ohne aufwendige Aufarbeitung frei von nicht (meth)acrylhaltigen Monomeren und von sauren und/oder basischen Katalysatoren sind .

Die Erfindung betrifft ein Verfahren zur Herstellung von Methacryloxy- und/oder Acryloxygruppen aufweisenden flüssigkristallinen Polyorganosiloxanen durch Umsetzung von Polyorganosiloxanen mit jeweils direkt an Siliciumatome gebundenen Wasserstoffatomen (H-Siloxane) mit mesogene Gruppen aufweisenden Alkenen und/oder Alkinen, wobei die genannten Polyorganosiloxane in einem ersten Schritt mit mesogene Gruppen aufweisendem Alken und/ oder Alkin umgesetzt werden und in einem zweiten Schritt mit einem mindestens eine Methacryloxy- und/oder Acryloxygruppe und mesogene Gruppen aufweisendem Alken und/oder Alkin umgesetzt werden.

Bei den genannten Polyorganosiloxanen mit direkt an Siliciumatome gebundenen Wasserstoffatomen handelt es sich vorzugsweise um solche, die aus mindestens drei der Einheiten der allgemeinen Formel (I)

$$[R_pH_qSiO_{(4-p-q)/2}] \qquad (I),$$

aufgebaut sind, worin

- R gleiche oder verschiedene, gegebenenfalls mit Halogenatomen oder Cyanogruppen substituierte $C_1$- bis $C_{18}$-Kohlenwasserstoffreste,
- p eine ganze Zahl im Wert von 0 bis 3 und einem durchschnittlichen Wert von 0,8 bis 2,2,
- q eine ganze Zahl im Wert von 0 bis 3 mit einem durchschnittlichen Wert, der so bemessen ist, daß mindestens ein und im Durchschnitt mindestens zwei direkt an Siliciumatome gebundene Wasserstoffatome pro Molekül zugegen sind,

und die Summe von p und q maximal 3 beträgt.

Beispiele für unsubstituierte Reste R sind Alkylreste, wie der Methyl-, Ethyl-, n- Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-Octylrest und iso-Oktylreste, wie der 2,2,4-Trimethylpentylrest, Nonylreste, wie der n-Nonylrest, Decylreste, wie der n-Decylrest, Dodecylreste, wie der n-Dodecylrest, Oktadecylreste, wie der n-Oktadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphtyl- und Anthryl- und Phenanthrylrest; Alkarylreste, wie o-, m-, p-Tolylreste, Xylylreste und Ethylphenylreste; Aralkylreste, wie der Benzylrest, der $\alpha$-und der $\beta$-Phenylethylrest.

Beispiele für substituierte Reste **R** sind Cyanalkylreste, wie der $\beta$-Cyanethylrest, und halogenierte Kohlen-

wasserstoffreste, beispielsweise Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.
Vorzugsweise bedeutet R jeweils einen gegebenenfalls halogenierten Kohlenwasserstoffrest mit 1 bis 18, insbesondere 1 bis 10 Kohlenstoffatomen.

Besonders bevorzugt als Reste R sind $C_1$- bis $C_4$-Alkylreste und Phenylreste, insbesondere Methylreste.

Besonders bevorzugt als Polyorganosiloxane der allgemeinen Formel (I) sind solche, die zu mindestens 90% ihrer Einheiten aus solchen der Formeln

$$[(CH_3)_2SiO] \quad (II),$$

$$[(CH_3)HSiO] \quad (III),$$

$$[H(CH_3)_2SiO_{1/2}] \quad (IV)$$

und

$$[(CH_3)_3SiO_{1/2}] \quad (V)$$

aufgebaut sind.

Die Polyorganosiloxane der allgemeinen Formel (I) enthalten vorzugsweise 2 bis 100 Siliciumatome pro Molekül, insbesondere 2 bis 15 Siliciumatome pro Molekül.

Die im ersten Schritt eingesetzten mesogene Gruppen aufweisenden Alkene weisen neben der Alkengruppe, die in Form einer Methacryloxy- und/oder Acryloxygruppe vorliegen kann, keine Methacryloxy- und/oder Acryloxygruppe auf. Die im ersten Schritt eingesetzten mesogene Gruppen aufweisenden Alkine weisen keine Methacryloxy- und/oder Acryloxygruppe auf.

Als mesogene Gruppen aufweisende Alkene bzw. Alkine können alle solche Verbindungen eingesetzt werden, die auch bisher zur Herstellung flüssigkristalliner Polyorganosiloxane durch Anlagerung von ethylenisch bzw. acetylenisch ungesättigten, mesogene Gruppen enthaltenden Verbindungen an direkt an Siliciumatome gebundene Wasserstoffatome von Organosilanen und Polyorganosiloxanen eingesetzt werden konnten.

Der Begriff "mesogene Gruppen" ist in der Fachwelt gut bekannt. Es sind die Gruppen, die in einem Molekül flüssigkristalline Eigenschaften hervorrufen können. Beispiele für mesogene Gruppen sind Derivate des Cyclohexans, wie Cyclohexylcarbonsäurecyclohexylester, Cyclohexylcarbonsäurephenylester, Cyclohexylphenylether, Cyclohexylbenzole, Dicyclohexylderivate, Derivate des Stilbens, Benzoesäurephenylester und seine Derivate, Steroide, wie Cholesterin, und dessen Derivate, wie Cholesterinester, Cholestan und dessen Derivate, Benzylidenaniline, Azobenzol und seine Derivate, Azoxybenzol und dessen Derivate, Alkyl- und Alkoxyderivate von Biphenyl, und Schiff'sche Basen. Oftmals ist es aus anwendungstechnischen Gründen erwünscht, daß die mesogenen Gruppen polare Funktionen, wie beispielsweise die Nitrilgruppe, enthalten, um im Flüssigkristall einen hohen dielektrischen Anisotropieeffekt zu erzielen.

Als im ersten Schritt eingesetzte mesogene Gruppen aufweisende Alkene und Alkine sind bevorzugt diejenigen der allgemeinen Formel (VI)

$$B\text{-}(X^1{}_a\text{-}A^1{}_b\text{-}A^2{}_c)_d\text{-}Z_e\text{-}(\text{-}X^2{}_f\text{-}A^3{}_g\text{-}A^4{}_h\text{-})_i\text{-}A^5 \quad (VI),$$

worin

| | |
|---|---|
| **B** | einen gegebenenfalls mit Halogenatomen substituierten einwertigen Kohlenwasserstoffrest der allgemeinen Formel $C_nH_m$ darstellt, bei dem eine oder mehrere nicht benachbarte Methyleneinheiten durch Sauerstoffatome ersetzt sein können, |
| **n** | eine ganze Zahl im Wert von 2 bis 20, |
| **m** | eine ganze Zahl mit dem Wert von (2n-1) oder (2n-3) bedeuten, |
| **$X^1$** und **$X^2$** | gleiche oder verschiedene zweibindige Reste aus der Gruppe -O-, -COO-, -CONH-, -CO-, -S-, -C≡C-, -CH=CH-, $-CH_2-CH_2-$, -CH=N-, -N=N- und -N=N(O)-, |

**$A^1$, $A^2$, $A^3$ und $A^4$** gleiche oder verschiedene zweibindige Reste, nämlich 1,4-Phenylen-, 1,4-Cyclohexylenreste, substituierte Arylene mit 6 bis 18 Kohlenstoffatomen, substituierte Cycloalkylene mit 6 bis 18 Kohlenstoffatomen und Heteroarylene mit 4 bis 10 Kohlenstoffatomen,

**Z** gleiche oder verschiedene zwei- bis vierbindige Benzol-, 1,4-Cyclohexan- oder 1,3-Cyclopentanreste,

**$A^5$** gleiche oder verschiedene, gesättigte oder olefinisch ungesättigte Alkyl-, Alkoxy- oder Cycloalkylreste mit jeweils 1 bis 16 Kohlenstoffatomen, Steroidreste, Halogenatome, Wasserstoffatome, Hydroxyl-, Nitril- und Trialkylsiloxygruppen, deren jeweilige Alkylreste 1 bis 8 Kohlenstoffatome besitzen,

**a, b, c, d, f, g, h** und **i** jeweils unabhängig voneinander gleiche oder verschiedene ganze Zahlen im Wert von 0, 1, 2 oder 3, die Summe a+b+c+d+e+f+g+h+i mindestens 2 und die Summe von d und i maximal 4 beträgt und

**e** eine Zahl im Wert von 0 oder 1, bedeuten.

Beispiele für Reste **$A^5$** sind die vorstehend für R aufgeführten Beispiele für Alkylreste, Alkenylreste, Cycloalkylreste; Alkyloxyreste, wie der Methoxy-, Ethoxy-, n-Propoxy-, Iso-propoxy-, n-, sec.- und tert.-Butoxyrest, Pentoxy-, Hexoxy-, Oktoxy-, Decoxy-, Hexadecoxyreste; Alkenoxyreste, wie der Allyloxyrest, Butenyloxy-, Pentenyloxy-, Hexenyloxy-, Oktenyloxy-, Decenyloxy- und Hexadecenyloxyreste; Cycloalkenylreste, wie Cyclopentenyl-, Cyclohexenyl- und Cycloheptenylreste; Steroidreste, wie der Cholestan-, Cholesteryl- und Doristerylrest; Fluor-, Chlor- oder Bromatome; Wasserstoffatome; Hydroxyl-, Nitril-, Trimethylsilyloxy-, Triethylsilyloxy-, Trimethylsilyl- und Triethylsilylgruppen.

Es ist besonders bevorzugt, daß $B-(X^1{}_a-A^1{}_b-A^2{}_c)_d-$ in der obigen allgemeinen Formel (VI) einen Rest der allgemeinen Formel (VII)

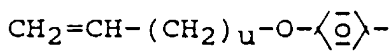

**(VII)**

bedeutet, wobei **u** eine ganze Zahl im Wert von 0 bis 8, insbesondere die Werte 0, 1 oder 2 bedeutet.
Insbesondere bevorzugt als Verbindungen der allgemeinen Formel (VI) sind diejenigen der allgemeinen Formel (VIII):

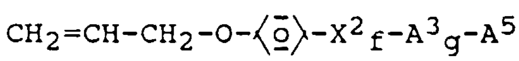

**(VIII),**

worin **$X^2$, $A^3$, $A^5$, f** und **g** die für die allgemeine Formel (VI) angegebenen Bedeutungen haben und vorzugsweise f den Wert 1 und g entweder 0 oder 1 besitzt.

Als im zweiten Schritt eingesetzte eine Methacryloxy- oder Acryloxygruppe und mesogene Gruppen aufweisende Alkene und Alkine sind bevorzugt diejenigen der allgemeinen Formel (IX)

$$B-(X^1{}_a-A^1{}_b-A^2{}_c)_d-Z_e-(-X^2{}_f-A^3{}_g-A^4{}_h-)_i-R^1 \quad \text{(IX)},$$

worin
**B, $X^1$, $X^2$, Z, $A^1$, $A^2$, $A^3$, $A^4$, a, b, c, d, e, f, g, h** und **i** die für die allgemeine Formel (VI) angegebenen Bedeutungen haben und
**$R^1$** einen Rest der allgemeinen Formel (X)

$$-(CH_2)_t-O-CO-CQ=CH_2 \quad \text{(X)},$$

bedeutet, in der

**Q** eine Methylgruppe oder ein Wasserstoffatom und
**t** eine ganze Zahl mit dem Wert von 0 bis 10 bedeutet und eine oder mehrere nicht benachbarte Methyleneinheiten

durch Sauerstoffatome ersetzt sein können.

Insbesondere bevorzugte Reste $\mathbf{R^1}$ sind die (Meth)acryloxy-, (Meth)acryloxyethylenoxy-, (Meth)acryloxydi(ethylenoxy)- und (Meth)acryloxytri(ethylenoxy)gruppe.

Ganz besonders bevorzugt als im zweiten Schritt eingesetzte eine Methacryloxy- oder Acryloxygruppe und mesogene Gruppen aufweisende Alkene und Alkine sind diejenigen der allgemeinen Formel (XI)

$$CH_2=CH-R^2-O-R^1 \qquad (XI),$$

worin

**$R^1$** die in der allgemeinen Formel (X) angegebene Bedeutung hat, wobei
**t** eine ganze Zahl im Wert von 0 oder 2 und
**Q** eine Methylgruppe bedeutet,
**$R^2$** einen zweiwertigen Rest der allgemeinen Formel (XII)

$$-(CH_2)_u-X^1-A^1-X^2-A^2-(X^2)_v-(A^3)_w- \qquad (XII),$$

bedeutet, worin

**u** eine ganze Zahl im Wert von 1 bis 8 ,
**v** und **w** jeweils einen Wert von 0 oder 1 bedeuten und
**$A^1$, $A^2$, $A^3$, $X^1$** und **$X^2$** die für die allgemeine Formel (VI) angegebenen Bedeutungen besitzen.

Als Bedeutung für $\mathbf{A^1}$, $\mathbf{A^2}$ und $\mathbf{A^3}$ sind 1,4-Phenylenreste und als Bedeutung für $\mathbf{X^2}$ ist der Rest -COO- bevorzugt.

In allen vorstehenden allgemeinen Formeln können die Reste $\mathbf{X^1}$ und $\mathbf{X^2}$, falls sie nicht symmetrisch gebaut sind, mit jedem ihrer Enden an jedem ihrer Bindungspartner verbunden sein. So kann beispielsweise der Rest -COO- auch als -OOC-, der Rest -CONH- auch als -NHCO-, -CH=N- auch als -N=CH- gebunden sein.

In allen vorstehenden allgemeinen Formeln sind als Substituenten für die substituierten Arylene und Cycloalkylene $\mathbf{A^1}$, $\mathbf{A^2}$, $\mathbf{A^3}$ und $\mathbf{A^4}$ Halogenatome, $C_1$- bis $C_4$-Alkoxyreste, Nitro- und Cyanogruppen, $C_1$- bis $C_6$-Alkylreste, Carboxy-($C_1$- bis $C_4$-Alkyl)-Reste und Tri-($C_1$- bis $C_4$-Alkyl)-Siloxyreste bevorzugt.

Vorzugsweise haben **n** in den vorstehenden allgemeinen Formeln (VI) und (IX) Werte von 3 bis 10 und **m** den Wert (2n-1).

In allen vorstehenden allgemeinen Formeln haben **a** und **f** jeweils unabhängig voneinander vorzugsweise die Werte 0 oder 1.

Die erfindungsgemäße Umsetzung der sowohl im ersten Schritt, als auch im zweiten Schritt eingesetzten mesogene Gruppen aufweisenden Alkene und Alkine mit den Polyorganosiloxanen erfolgt vorzugsweise in Gegenwart eines Platinmetalle und/ oder deren Verbindungen enthaltenden Katalysators. Bevorzugt als Platinmetalle und/oder deren Verbindungen sind Platin und/oder dessen Verbindungen. Es können hier alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6*6H_2O$, $Na_2PtCl_4*4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6*6H_2O$ und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gammapicolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe.

Platinkatalysator wird vorzugsweise in Mengen 0,5 bis 500 Gewichts-ppm (Gewichtsteilen je Million Gewichtsteilen), insbesondere 2 bis 400 Gewichts-ppm, jeweils berechnet als elementares Platin und bezogen auf das Gesamtgewicht der in der Reaktionsmischung vorliegenden H-Siloxane eingesetzt.

Während des zweiten Schrittes der erfindungsgemäßen Umsetzung wird vorzugsweise Sauerstoff, insbesondere Luft mit einer Rate von 0.01 bis 10, vorzugsweise 0.5 bis 2 1/min·kg durch das Reaktionsgemisch geleitet. Die beiden Schritte der erfindungsgemäßen Umsetzung können unter sonst gleichen, aber auch unter verschiedenen Reaktionsbedingungen durchgeführt werden.

Die erfindungsgemäße Umsetzung (nachfolgend Hydrosilylierung genannt) kann in Abwesenheit oder in Anwesenheit von Lösungsmittel erfolgen, wobei die Anwesenheit von Lösungsmittel bevorzugt ist.
Falls Lösungsmittel verwendet werden, sind Lösungsmittel oder Lösungsmittelgemische, welche unter den Reaktionsbedingungen weitgehend inert sind und insbesondere solche mit einem Siedepunkt bzw. Siedebereich von bis zu 120° C bei 0,1 MPa bevorzugt. Beispiele für solche Lösungsmittel sind Ether, wie Dioxan, Tetrahydrofuran, Diethylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Methyl-isobutylketon; Schwefelkohlenstoff und Nitrobenzol, oder Gemische dieser Lösungsmittel.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden. Die Reaktion kann auch in einem Lösungsmittelgemisch mit einer Mischungslücke ausgeführt werden, wobei in jeder der Mischphasen jeweils mindestens ein Reaktionspartner löslich ist.

Die Hydrosilylierung kann beim Druck der umgebenden Atmosphäre, also etwa 0,1 MPa (abs.), sie kann auch bei höheren oder bei niedrigeren Drücken durchgeführt werden. Bevorzugt sind Drücke von 0,01 MPa (abs.) bis 1,0 MPa (abs.), insbesondere von 0,09 MPa (abs.) bis 0,11 MPa (abs.).

Vorzugsweise wird die Hydrosilylierung bei Temperaturen von 0 °C bis 150 °C, insbesondere von 60 °C bis 100 °C durchgeführt.

Vorzugsweise werden im ersten Schritt 0,01 bis 0,98 Mol, insbesondere 0,02 bis 0,9 Mol an mesogene Gruppen aufweisendem Alken und/oder Alkin pro Grammatom direkt an Siliciumatome gebundene Wasserstoffatome bei der Hydrosilylierung eingesetzt.

Das Produkt der Hydrosilylierung im ersten Schritt muß nicht - und wird vorzugsweise nicht - aus der Reaktionsmischung isoliert werden. Der folgende zweite Hydrosilylierungschritt wird vorzugsweise in demselben Reaktionsgefäß wie der erste Schritt der Hydrosilylierung durchgeführt (Eintopfreaktion).

Im zweiten Hydrosilylierungschritt werden vorzugsweise 0,01 bis 5 Mol, insbesondere 0,1 bis 2 Mol an Methacryloxyund/oder Acryloxygruppen und mesogene Gruppen aufweisendem Alken und/oder Alkin pro Grammatom direkt an Siliciumatome gebundene Wasserstoffatome eingesetzt.

Die nach dem erfindungsgemäßen Verfahren herstellbaren Methacryloxy- und/oder Acryloxygruppen aufweisenden flüssigkristallinen Polyorganosiloxane sind ebenfalls Gegenstand der Erfindung.

Alle der vorstehend oder nachstehend genannten Reaktionspartner, Katalysatoren, Lösungsmittel, Photoinitiatoren, UV-Licht-Quellen etc. können einzeln oder im Gemisch eingesetzt werden. Es können z.B. jeweils eine Verbindung der allgemeinen Formeln (I), (VI), (IX), ein Platinkatalysator, ein Lösungsmittel usw., es können auch jeweils Gemische oder Kombinationen der vorstehend genannten Substanzen bzw. Geräte eingesetzt werden.

Die gemäß dem oben geschilderten erfindungsgemäßen Verfahren herstellbaren Methacryloxy- und /oder Acryloxygruppen aufweisenden flüssigkristallinen Polyorganosiloxane können zu dreidimensional vernetzten flüssigkristallinen Polyorganosiloxanen polymerisiert werden.

Die Vernetzung kann auch in Gegenwart weiterer polymerisierbarer Verbindungen durchgeführt werden. Solche polymerisierbaren Verbindungen weisen vorzugsweise mindestens zwei Methacryloxy- und /oder Acryloxygruppen pro Molekül auf.

Diese Vernetzung wird vorzugsweise mittels freier Radikale bewirkt, welche durch Peroxide, durch UV-Licht oder durch energiereichere elektromagnetische Strahlung als UV-Licht, oder thermisch erzeugt werden. Die Vernetzung kann aber auch mittels direkt an Siliciumatome gebundene Wasserstoffatome enthaltenden Vernetzern unter Katalyse durch die oben genannten Platinmetallkatalysatoren bewirkt werden. Sie kann auch kationisch oder anionisch erfolgen. Besonders bevorzugt ist die Vernetzung durch UV-Licht.

Unter UV-Licht in diesem Sinne ist elektromagnetische Strahlung mit einer Wellenlänge von 13 nm bis 400 nm, insbesondere von 100 nm bis 400 nm, zu verstehen. Unter Vernetzung durch UV-Licht ist in diesem Fall die Vernetzung mit Hilfe einer Strahlungsquelle zu verstehen, welche eine größere Intensität an UV-Licht als das normale Sonnenlicht am Erdboden besitzt. Als UV-Strahlungsquellen sind solche mit einem Intensitätsmaximum im Bereich von 200 nm bis 400 nm bevorzugt. Solche UV-Lampen sind im Handel erhältlich.

Die erfindungsgemäß herstellbaren flüssigkristallinen Polyorganosiloxane werden vorzugsweise in Anwesenheit von Photoinitiatoren und/oder Photosensibilisatoren durch UV-Licht vernetzt.

Geeignete Photoinitiatoren und Photosensibilisatoren sind jeweils gegebenenfalls substituierte Acetophenone, Propiophenone, Benzophenone, Anthrachinone, Benzile, Carbazole, Xanthone, Thioxanthone, Fluorene, Fluorenone, Benzoine, Naphthalinsulfonsäuren und Benzaldehyde und Zimtsäuren.

Beispiele hierfür sind Fluorenon, Fluoren, Carbazol; Acetophenon; substituierte Acetophenone, wie 3-Methylacetophenon, 2,2'-Dimethoxy-2-phenylacetophenon, 4-Methylacetophenon, 3-Bromacetophenon, 4-Allylacetophenon, p-Diacetylbenzol, p-tert.-Butyltrichloracetophenon; Propiophenon; substituierte Propiophenone, wie 1-[4-(Methylthio)phenyl]-2-morpholinopropanon-1; Benzophenon; substituierte Benzophenone, wie Michlers Keton, 3-Methoxybenzophenon, 4,4'-Dimethylaminobenzo-phenon, 4-Methylbenzophenon, 4-Chlorbenzophenon, 4,4'-Dimethoxybenzophenon, 4-Chlor-4'-benzylbenzophenon; Xanthon; substituierte Xanthone, wie 3-Chlorxanthon, 3,9-Dichlorxanthon, 3-Chlor-8-nonylxanthon; Thioxanthon; substituierte Thioxanthone, wie Isopropenylthioxanthon; Anthrachinon; substituierte Anthrachinone, wie Chloranthrachinon und Anthrachino-1,5-disulfonsäuredinatriumsalz; Benzoin; substituierte Benzoine, wie Benzoinmethylether; Benzil; 2-Naphthalinsulfonylchlorid; Benzaldehyd; Zimtsäure.

Photoinitiatoren und/oder Photosensibilisatoren sind in den vernetzbaren Zusammensetzungen vorzugsweise in Mengen von 0,01 bis 10 Gewichts-%, insbesondere von 0,5 bis 5 Gewichtsprozent, jeweils bezogen auf das Gewicht des flüssigkristallinen Organopolysiloxans, eingesetzt.

Es ist weiterhin bevorzugt, den vernetzbaren Zusammensetzungen Polymerisationsinhibitoren zuzusetzen, und zwar insbesondere von 1 ppm bis 5 000 ppm, speziell von 100 bis 1 000 ppm, jeweils bezogen auf das Gesamtgewicht der Zusammensetzung.

Als Polymerisationsinhibitoren sind Dihydroxybenzole bevorzugt, welche gegebenenfalls mit $C_1$- bis $C_6$-Alkylgruppen am Ring substituiert oder an einem oder beiden Hydroxylgruppen verethert sind. Beispiele für solche Polymerisationsinhibitoren sind Hydrochinon, p-Methoxyphenol und p-tert.-Butylbrenzkatechin. Ebenfalls wirksam als Polymerisationsinhibitoren sind Chinonderivate und Nitrosoverbindungen.

Ferner können die vernetzbaren Zusammensetzungen Füllstoffe, Pigmente, Weichmacher, Haftvermittler, weitere Polymere, Lösungsmittel, Emulgatoren, Rostschutzmittel, Stabilisatoren und andere, zumeist übliche Zusätze enthalten.

Vorzugsweise werden die vernetzbaren Zusammensetzungen dadurch vernetzt, daß sie bei Temperaturen von -20°C bis +180°C, insbesondere bei +20°C bis +100°C auf ein Substrat aufgetragen und nach üblichen Methoden orientiert werden, beispielsweise durch Schmelzauftrag mittels eines Rakels oder durch elektrische oder magnetische Felder und anschließend der Strahlung einer UV-Lampe ausgesetzt werden.

Die auf diese Weise herstellbaren dreidimensional vernetzten flüssigkristallinen Polyorganosiloxane lassen sich zur Herstellung von Membranen zum Trennen von Stoffgemischen (beispielsweise von Gasen wie Sauerstoff und Stickstoff) und zur gezielten Wirkstoffreigabe (beispielsweise von Arzneimitteln und Agrochemikalien), in der optischen Anzeige elektromagnetischer Felder (Optoelektronik), auf dem Gebiet der Informationsspeicherung, der elektrographischen Verfahren, der Lichtmodulation, als Bestandteil von Polarisationsfolien, optischen Filtern, Reflektoren, in Beschichtungen, als Lackpigmente und stationäre Phasen für die Gas- und Flüssigchromatographie verwenden.

Sie eignen sich insbesondere zur Beschichtung von Folien, Stoffen, Leder, Keramik, Holz, Metall oder Kunststoffen zu Dekorationszwecken.

In den nachfolgend angegebenen Beispielen sind, falls nicht anders angegeben,

a.) alle Mengenangaben auf das Gewicht bezogen,
b.) alle Drücke 0,10 MPa (abs.),
c.) alle Temperaturen 20°C.

**Beispiel 1**

Polyorganosiloxan mit (Meth)acrylseitenkette

a.) Eine Lösung aus 136.8 g

4-(Prop-2-en-1-oxy)benzoesäurecholesterinester (erhältlich gemäß DE-A 3110048) und 33.0 g Tetramethylcyclotetrasiloxan in 300 ml Toluol wurde in Gegenwart von 24 mg Dicyclopentadienplatindichlorid lh unter Rückfluß gekocht. Nach Abkühlen der Lösung auf 40°C wurde ein Strom von getrockneter Luft mit 20 ml/min in die Lösung eingeleitet und eine Lösung von 77.5g 4-(Prop-2-en-l-oxy)benzoesäure(4-methacryloxy-phenyl)ester und 150 mg Q1301 (Aluminium-Kupferron-Komplex, erhältlich von Wako Pure Chemicals, 4040 Neuss) in 300 ml Essigsäureethylester hinzugefügt. Die vereinigten Lösungen wurden bei 70°C 30 min gerührt, dann filtriert und nach dem Abdestillieren des Essigsäureethylesters zweimal aus Toluol/ Petrolether umgefällt. Die physikalischen und thermodynamischen Daten sind in Tabelle 1 zusammengefaßt. Die NMR-spektroskopische Auswertung ergibt, daß über 80% des eingesetzten 4-(Prop-2-en-1-oxy)benzoesäure(4-methacryloxyphenyl)ester unverändert addiert haben.

b.) Eine Lösung aus 11.55 g

4-(Prop-2-en-1-oxy)benzoesäure(4-phenylphenyl)ester und 3.3 g Pentamethylcyclopentasiloxan in 400 ml

Toluol wurde in Gegenwart von 5 mg Dicyclopentadienplatindichlorid eine Stunde unter Rückfluß gekocht. Nach Abkühlen der Lösung auf 40°C wurde ein Strom von getrockneter Luft mit 5 ml/min in die Lösung eingeleitet und eine Lösung von 4.65 g 4-(Prop-2-en-1-oxy)benzoesäure(4-methacryloxy-phenyl)ester und 5 mg Q1301 in 50 ml Essigsäureethylester hinzugefügt. Die vereinigten Lösungen wurden bei 70°C 60 min gerührt, dann filtriert und nach dem Abdestillieren des Essigsäureethylesters zweimal aus Toluol/Petrolether umgefällt. Die physikalischen und thermodynamischen Daten sind in Tabelle 1 zusammengefaßt.

c.) Eine Lösung aus 3.61 g

4-(Prop-2-en-1-oxy)benzoesäurecholesterinester und 24.0 g Pentamethyltrisiloxan in 10 ml Xylol wurde in Gegenwart von 3 mg Platindivinyldisiloxankomplex eine Stunde unter Rückfluß gekocht. Nach Abdestillieren flüchtiger Bestandteile wurde der Rückstand auf 40°C abgekühlt, eine Lösung von 4.09 g 4-(Prop-2-en-1-oxy)benzoesäure (4-methacryloxy-phenyl)ester und 5 mg Q1301 in 40 ml Essigsäureethylester hinzugefügt und ein Strom von getrockneter Luft mit 5 ml/min eingeleitet. Die vereinigten Lösungen wurden bei 70°C 2 Stunden gerührt, dann filtriert und nach dem Abdestillieren des Essigsäureethylesters zweimal aus Toluol/Petrolether umgefällt. Die physikalischen und thermodynamischen Daten sind in Tabelle 1 zusammengefaßt.

d.) Eine Lösung aus 6.84 g

4-(Prop-2-en-1-oxy)benzoesäurecholesterinester und 3.3 g Pentamethylcyclopentasiloxan in 100 ml Toluol wurde in Gegenwart von 4 mg Dicyclopentadienplatindichlorid eine Stunde unter Rückfluß gekocht. Nach Abkühlen der Lösung auf 40°C wurde ein Strom von getrockneter Luft mit 5 ml/min in die Lösung eingeleitet und eine Lösung von 11.63 g 4-(Prop-2-en-l-oxy)benzoesäure(4-methacryloxy-phenyl)ester und 10 mg Q1301 (erhältlich von Wako Pure Chemicals) in 50 ml Essigsäureethylester hinzugefügt. Die vereinigten Lösungen wurden bei 70°C 30 min gerührt, dann filtriert und nach dem Abdestillieren des Essigsäureethylesters zweimal aus Toluol/ Petrolether umgefällt. Die physikalischen und thermodynamischen Daten sind in Tabelle 1 zusammengefaßt.

e.) Eine Lösung aus 20.51 g

4-(Prop-2-en-1-oxy)benzoesäurecholesterinester und 3.3 g Pentamethylcyclopentasiloxan in 100 ml Toluol wurde in Gegenwart von 4 mg Dicyclopentadienplatindichlorid eine Stunde unter Rückfluß gekocht. Nach Abkühlen der Lösung auf 40°C wurde ein Strom von getrockneter Luft mit 5 ml/min in die Lösung eingeleitet und eine Lösung von 3.87 g 4-(Prop-2-en-l-oxy)benzoesäure(4-methacryloxy-phenyl)ester und 20 mg Q1301 (erhältlich von Wako Pure Chemicals) in 50 ml Essigsäureethylester hinzugefügt. Die vereinigten Lösungen wurden bei 70°C 30 min gerührt, dann filtriert und nach dem Abdestillieren des Essigsäureethylesters zweimal aus Toluol/ Petrolether umgefällt. Die physikalischen und thermodynamischen Daten sind in Tabelle 1 zusammengefaßt.

f.) Eine Lösung aus 13.68 g

4-(Prop-2-en-l-oxy)benzoesäurecholesterinester und 3.3 g Pentamethylcyclopentasiloxan in 100 ml Toluol wurde in Gegenwart von 4 mg Dicyclopentadienplatindichlorid eine Stunde unter Rückfluß gekocht. Nach Abkühlen der Lösung auf 40°C wurde ein Strom von getrockneter Luft mit 5 ml/min in die Lösung eingeleitet und eine Lösung von 7.85 g 4-(But-3-enyl)benzoesäure(4-methacryloxyphenyl)ester und 20 mg Q1301 (erhältlich von Wako Pure Chemicals) in 50 ml Essigsäureethylester hinzugefügt. Die vereinigten Lösungen wurden bei 70°C 30 min gerührt, dann filtriert und nach dem Abdestillieren des Essigsäureethylesters zweimal aus Toluol/Petrolether umgefällt. Die physikalischen und thermodynamischen Daten sind in Tabelle 1 zusammengefaßt.

g.) Eine Lösung aus 8.45 g

4-(Prop-2-en-l-oxy)benzoesäure(4-chlor-phenyl)ester und 3.82 g Pentamethylcyclopentasiloxan in 100 ml Toluol wurde in Gegenwart von 4 mg Dicyclopentadienplatindichlorid eine Stunde unter Rückfluß gekocht. Nach Abkühlen der Lösung auf 40°C wurde ein Strom von getrockneter Luft mit 5 ml/min in die Lösung eingeleitet und eine Lösung von 9.91 g 4-(Prop-2-en-l-oxy)benzoesäure(4-methacryloxy-phenyl)ester und 20 mg Q1301 (erhältlich von Wako Pure Chemicals) in 50 ml Essigsäureethylester hinzugefügt. Die vereinigten Lösungen wurden bei 70°C 30 min gerührt, dann filtriert und nach dem Abdestillieren des Essigsäureethylesters zweimal aus Toluol/ Petrolether umgefällt. Die physikalischen und thermodynamischen Daten sind in Tabelle 1 zusammengefaßt.

h.) Eine Lösung aus 9.57 g

4-(Prop-2-en-1-oxy)benzoesäurecholesterinester und 3.3 g Pentamethylcyclopentasiloxan in 100 ml Toluol wurde in Gegenwart von 4 mg Dicyclopentadienplatindichlorid eine Stunde unter Rückfluß gekocht. Nach Abkühlen der Lösung auf 40°C wurde ein Strom von getrockneter Luft mit 5 ml/min in die Lösung eingeleitet und eine Lösung von 12.74 g 4-(Prop-2-en-l-oxy)benzoesäure[4(4-methacryloxybiphenyl)]ester und 20 mg Q1301 (erhältlich von Wako Pure Chemicals) in 50 ml Essigsäureethylester hinzugefügt. Die vereinigten Lösungen wurden bei 70°C 30 min gerührt, dann filtriert und nach dem Abdestillieren des Essigsäureethylesters zweimal aus Toluol/ Petrolether umgefällt. Die physikalischen und thermodynamischen Daten sind in Tabelle 1 zusammengefaßt.

In Beispiel 1 verwendete Monomere

4-(Prop-2-en-1-oxy)benzoesäurecholesterinester

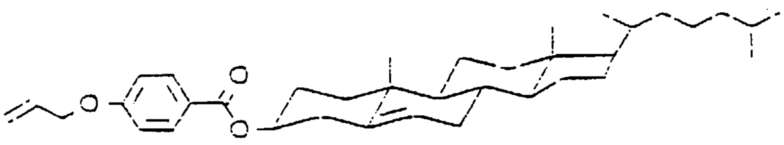

4-(Prop-2-en-l-oxy)benzoesäure(4-chlorphenyl)ester

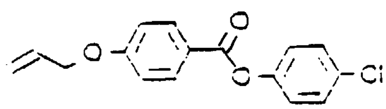

4-(Prop-2-en-1-oxy)benzoesäure(4-methacryloxy-phenyl)ester

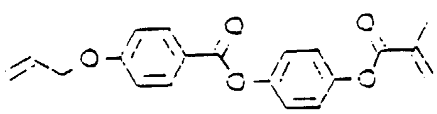

4-(But-3-enyl)benzoesäure (4-methacryloxyphenyl)ester

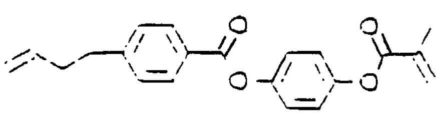

4-(Prop-2-en-l-oxy)benzoesäure[4 (4-methacryloxybiphenyl)]ester

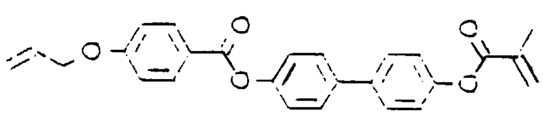

Anmerkungen zu den Tabellen 1 bis 3:

[1)] Der Gehalt an Methacrylgruppen gibt die Anzahl an Methacrylgruppen pro 100 mesogenen Seitengruppen an. Der Wert "Methacrylgehalt berechnet" entspricht Annahme, daß alle eingesetzten methacrylhaltigen mesogenen Monomere an das Organo-H-Siloxan gebunden sind und nach der Hydrosilylierung alle Methacrylgruppen erhalten sind. Der Wert "Methacrylgehalt gemessen" entspricht der Anzahl der anhand von $^1$HNMR-Spektren gemessenen Methacrylgruppen bezogen auf alle mesogenen Seitenketten.

[2)] bestimmt durch Messung der Transmission bei 800 nm

[3)] +++ sehr stark, ++ stark, + vorhanden, 0 nicht vorhanden, jeweils bestimmt an einer nicht umgefällten Probe

[4)] ermittelt anhand von IH-NMR-Spektren

[5)] bestimmt unter Zusatz von 500 ppm Q1301

Tabelle 1

| Beispiel | 1a | 1b | 1c | 1d | 1e |
|---|---|---|---|---|---|
| Organo-H-Siloxan | $(MeHSiO)_4$ | $(MeHSiO)_5$ | $Me(MeHSiO)_3Me$ | $(MeHSiO)_5$ | $(MeHSiO)_5$ |
| Methacrylgehalt berechnet (Mol%) 1) | 50 | 30 | 33 | 75 | 25 |
| Methacrylgehalt gemessen Mol (%) 1) | 45 | 28 | 30 | 70 | 22 |
| Trübung (%) 2) | 0 | 0 | 0 | 0 | 0 |
| Reflexionsmaximum (nm) | 565 | - | 720 | 650 | 750 |
| Halbwertsbreite (nm) | 80 | - | 85 | 95 | 105 |
| Glaspunkt (°C) | 24 | 35 | 12 | 5 | 50 |

Fortsetzung Tabelle 1

| Beispiel | 1a | 1b | 1c | 1d | 1e |
|---|---|---|---|---|---|
| Klärpunkt (°C) | 185 | 155 | 95 | 125 | 195 |
| Geruch bei 20°C 3) | 0 | 0 | 0 | 0 | 0 |
| Restgehalt an 1. Monomer 4) | 0 | 0 | 0 | 0 | 0 |

Fortsetzung Tabelle 1

| Beispiel | 1f | 1g | 1h |
|---|---|---|---|
| Organo-H-Siloxan | $(MeHSiO)_5$ | $(MeHSiO)_5$ | $(MeHSiO)_5$ |
| Methacrylgehalt berechnet (Mol%)[1)] | 50 | 50 | 65 |

Fortsetzung Tabelle 1 (fortgesetzt)

| Beispiel | 1f | 1g | 1h |
|---|---|---|---|
| Methacrylgehalt gemessen (Mol (%)[1)] | 45 | 45 | 52 |
| Trübung (%)[2)] | 0 | 0 | 0 |
| Reflexionsmaximum (nm) | 565 | - | 680 |
| Halbwertsbreite (nm) | 80 | - | 85 |
| Glaspunkt (°C) | 30 | 15 | 38 |
| Klärpunkt (°C) | 127 | 92 | 167 |
| Geruch bei 20°C [3)] | 0 | 0 | 0 |
| Restgehalt an 1. Monomer | 0 | 0 | 0 |

Beispiel 2 - Vergleichsbeispiel - Polyorganosiloxan mit (Meth)acrylseitenkette nach US-A-5,211,877

a.) Eine Lösung aus 13.68 g 4-(Prop-2-en-1-oxy)benzoesäurecholesterinester, 8.55 g 4-(Prop-2-en-l-oxy)benzoesäure(4-trimethylsilyloxy-phenyl)es ter und 3.30 g Pentamethylcyclopentasiloxan in 100 ml Toluol wurde in Gegenwart von 4 mg Dicyclopentadienplatindichlorid eine Stunde und nach Zusatz von 10 ml Ethanol und einem Tropfen Salzsäure weitere 30 Minuten unter Rückfluß gekocht. Die Reaktionsmischung wurde auf 1/3 ihres ursprünglichen Volumens eingeengt, mit 9.0 g Methacrylsäureanhydrid, 0.4 g Triethylamin und 10 mg Q1301 versetzt und eine Stunde auf 100°C erwärmt. Flüchtige Bestandteile wurden danach abdestilliert, der dunkelschwarze Rückstand zweimal aus Toluol in Methanol umgefällt. Die physikalischen und thermodynamischen Daten sind in Tabelle 2 zusammengefaßt.

b.) Eine Lösung aus 1.65 g 4-(Prop-2-en-1-oxy)benzoesäure(4-biphenyl)ester, 5.13 g 4-(Prop-2-en-1-oxy)benzoesäure(4-trimethylsilyloxy-phenyl)es ter und 1.32 g Pentamethylcyclopentasiloxan in 50 ml Toluol wurde in Gegenwart von 4 mg Dicyclopentadienplatindichlorid eine Stunde und nach Zusatz von 5 ml Ethanol und einem Tropfen Salzsäure weitere 30 Minuten unter Rückfluß gekocht. Die Reaktionsmischung wurde auf 1/3 ihres ursprünglichen Volumens eingeengt, mit 10.0 g Methacrylsäureanhydrid, 0.4 g Triethylamin und 5 mg Q1301 versetzt und eine Stunde auf 100°C erwärmt. Flüchtige Bestandteile wurden danach abdestilliert, der tiefbraune Rückstand zweimal aus Toluol in Methanol umgefällt. Die physikalischen und thermodynamischen Daten sind in Tabelle 2 zusammengefaßt.

Tabelle 2

| Beispiel | 2a | 2a nicht umgefällt | 2b |
|---|---|---|---|
| Organo-H-Siloxan | $(MeHSiO)_5$ | $(MeHSiO)_5$ | $(MeHSiO)_5$ |
| vernetzbare Seitenkette (Mol%)[1)] | 50 | 50 | 75 |
| Methacrylgehalt (Mol %)[1)] | 41 | 42 | 61 |
| Trübung (%)[2)] | 3 | 5 | 3 |
| Reflexionsmaximum (nm) | 520 | 510 | - |
| Halbwertsbreite (nm) | 85 | 85 | - |
| Glaspunkt (°C)[5)] | 47 | 21 | 18 |
| Klärpunkt (°C)[5)] | 191 | 155 | 105 |
| Geruch bei 20°C [3)] | + | +++ | + |
| Restgehalt an 1. Monomer [4)] | 0.6 | 1.1 | 0.2 |

Beispiel 3 - Vergleichsbeispiel - Polyorganosiloxan mit (Meth)acrylseitenkette nach US-A-4,388,453.

Eine Lösung aus 136.8 g 4-(Prop-2-en-1-oxy)benzoesäurecholesterinester und 33.0 g Pentamethylcyclopentasiloxan in 300 ml Toluol sowie von 77.5g Prop-2-en-1-oxymethacrylsäureallylester und 150 mg Q1301 (Aluminium-Kupferron-Komplex, erhältlich von Wako Pure Chemicals, 4040 Neuss) in 300 ml Toluol wurde in Gegenwart von 24 mg Dicyclopentadienplatindichlorid lh bei 70°C gehalten. Nach Abkühlen wird das Produkt mit Methanol aus der aufkonzentrierten Lösung gefällt. Die physikalischen und thermodynamischen Daten sind in Tabelle 1 zusammengefaßt.

Die NMR-spektroskopische Auswertung ergibt , daß weniger als 50% des Prop-2-en-1-oxymethacrylsäureallylester unverändert addiert haben. Die physikalischen und thermodynamischen Daten sind in Tabelle 3 zusammengefaßt.

Tabelle 3

| Beispiel | 3 |
|---|---|
| Organo-H-Siloxan | $(MeHSiO)_5$ |
| vernetzbare Seitenkette (Mol%) [1)] | 50 |
| Methacrylgehalt (%) [1)] | 33 |
| Trübung (%) [2)] | 3 |
| Reflexionsmaximum (nm) | 480 |
| Halbwertsbreite (nm) | 155 |
| Glaspunkt (°C) [5)] | 15 |
| Klärpunkt (°C) [5)] | 89 |
| Geruch bei 20°C [3)] | 0 |
| Restgehalt an Monomer 1 [4)] (%) | 1.0 |

## Patentansprüche

**1.** Verfahren zur Herstellung von Methacryloxy- und/oder Acryloxygruppen aufweisenden flüssigkristallinen Polyorganosiloxanen durch Umsetzung von Polyorganosiloxanen mit jeweils direkt an Siliciumatome gebundenen Wasserstoffatomen mit mesogene Gruppen aufweisenden Alkenen und/oder Alkinen, wobei die genannten Polyorganosiloxane in einem ersten Schritt mit mesogene Gruppen aufweisendem Alken und/oder Alkin umgesetzt werden und in einem zweiten Schritt mit einem mindestens eine Methacryloxy- und/oder Acryloxygruppe und mesogene Gruppen aufweisendem Alken und/oder Alkin umgesetzt werden, wobei die im ersten Schritt eingesetzten Alkene neben der Alkengruppe, die in Form einer Methacryloxy-und/oder Acryloxygruppe vorliegen kann, keine Methacryloxy- und/oder Acryloxygruppe aufweisen und die im ersten Schritt eingesetzten Alkine keine Methacryloxy- und/oder Acryloxygruppe aufweisen.

**2.** Verfahren nach Anspruch 1, wobei als Polyorganosiloxane mit direkt an Siliciumatome gebundenen Wasserstoffatomen solche eingesetzt werden, die aus mindestens drei der Einheiten der allgemeinen Formel (I)

$$[R_pH_qSiO_{(4-p-q)/2}] \quad \text{(I)},$$

aufgebaut sind, worin

**R** gleiche oder verschiedene, gegebenenfalls mit Halogenatomen oder Cyanogruppen substituierte $C_1$- bis $C_{18}$-Kohlenwasserstoffreste,
**p** eine ganze Zahl im Wert von 0 bis 3 und einem durchschnittlichen Wert von 0,8 bis 2,2,
**q** eine ganze Zahl im Wert von 0 bis 3 mit einem durchschnittlichen Wert, der so bemessen ist, daß mindestens ein und im Durchschnitt mindestens zwei direkt an Siliciumatome gebundene Wasserstoffatome pro Molekül zugegen sind,

und die Summe von **p** und **q** maximal 3 beträgt.

**3.** Verfahren nach Anspruch 1, wobei als im ersten Schritt eingesetzte mesogene Gruppen aufweisende Alkene und Alkine diejenigen der allgemeinen Formel (VI)

$$B\text{-}(X^1{}_a\text{-}A^1{}_b\text{-}A^2{}_c)_d\text{-}Z_e\text{-}(\text{-}X^2{}_f\text{-}A^3{}_g\text{-}A^4{}_h\text{-})_i\text{-}A^5 \quad \text{(VI)},$$

eingesetzt werden, worin

**B** einen gegebenenfalls mit Halogenatomen substituierten einwertigen Kohlenwasserstoffrest der allgemeinen Formel $C_nH_m$ darstellt, bei dem eine oder mehrere nicht benachbarte Methyleneinheiten durch Sauerstoffatome ersetzt sein können,

**n** eine ganze Zahl im Wert von 2 bis 20,

**m** eine ganze Zahl mit dem Wert von (2n-1) oder (2n-3) bedeuten,

**$X^1$** und **$X^2$** gleiche oder verschiedene zweibindige Reste aus der Gruppe -O-, -COO-, -CONH-, -CO-, -S-, -C≡C-, -CH=CH-, $-CH_2-CH_2-$, -CH=N-, -N=N- und -N=N(O)-,

**$A^1$, $A^2$, $A^3$** und **$A^4$** gleiche oder verschiedene zweibindige Reste, nämlich 1,4-Phenylen-, 1,4-Cyclohexylenreste, substituierte Arylene mit 6 bis 18 Kohlenstoffatomen, substituierte Cycloalkylene mit 6 bis 18 Kohlenstoffatomen und Heteroarylene mit 4 bis 10 Kohlenstoffatomen,

**Z** gleiche oder verschiedene zwei- bis vierbindige Benzol-, 1,4-Cyclohexan- oder 1,3-Cyclopentanreste,

**$A^5$** gleiche oder verschiedene, gesättigte oder olefinisch ungesättigte Alkyl-, Alkoxy- oder Cycloalkylreste mit jeweils 1 bis 16 Kohlenstoffatomen, Steroidreste, Halogenatome, Wasserstoffatome, Hydroxyl-, Nitril- und Trialkylsiloxygruppen, deren jeweilige Alkylreste 1 bis 8 Kohlenstoffatome besitzen,

**a, b, c, d, f, g, h** und **i** jeweils unabhängig voneinander gleiche oder verschiedene ganze Zahlen im Wert von 0, 1, 2 oder 3, die Summe a+b+c+d+e+f+g+h+i mindestens 2 und die Summe von d und i maximal 4 beträgt und

**e** eine Zahl im Wert von 0 oder 1,

bedeuten.

**4.** Verfahren nach Anspruch 1, wobei als im zweiten Schritt eingesetzte eine Methacryloxy- oder Acryloxygruppe und mesogene Gruppen aufweisende Alkene und Alkine diejenigen der allgemeinen Formel (IX)

$$B\text{-}(X^1{}_a\text{-}A^1{}_b\text{-}A^2{}_c)_d\text{-}Z_e\text{-}(\text{-}X^2{}_f\text{-}A^3{}_g\text{-}A^4{}_h\text{-})_i\text{-}R^1 \quad \text{(IX)},$$

eingesetzt werden, worin
**B, $X^1$, $X^2$, Z, $A^1$, $A^2$, $A^3$, $A^4$, a, b, c, d, e, f, g, h** und **i** die für die allgemeine Formel (VI) angegebenen Bedeutungen haben und

**$R^1$** einen Rest der allgemeinen Formel (X)

$$-(CH_2)_t\text{-O-CO-CQ=}CH_2 \quad \text{(X)},$$

bedeutet, in der

**Q** eine Methylgruppe oder ein Wasserstoffatom und

**t** eine ganze Zahl mit dem Wert von 0 bis 10 bedeutet und eine oder mehrere nicht benachbarte Methyleneinheiten durch Sauerstoffatome ersetzt sein können.

**5.** Methacryloxy- und/oder Acryloxygruppen aufweisende flüssigkristalline Polyorganosiloxane, herstellbar gemäß dem Verfahren nach einem der Ansprüche 1, 2, 3 oder 4.

**6.** Verfahren zur Vernetzung von flüssigkristallinen Polyorganosiloxanen gemäß Anspruch 5 in Anwesenheit von Photoinitiatoren und/oder Photosensibilisatoren durch UV-Licht.

**7.** Dreidimensional vernetzte flüssigkristalline Polyorganosiloxane, herstellbar gemäß dem Verfahren nach Anspruch 6.

**8.** Verwendung der Polyorganosiloxane gemäß Anspruch 7 zur Herstellung von Membranen zum Trennen von Stoffgemischen, zur gezielten Wirkstofffreigabe, zur optischen Anzeige elektromagnetischer Felder, auf dem Gebiet der Informationsspeicherung, der elektrographischen Verfahren, der Lichtmodulation, als Bestandteil von Polarisationsfolien, optischen Filtern, Reflektoren, in Beschichtungen, als Lackpigmente und stationäre Phasen für die Gas- und Flüssigchromatographie.

## Claims

1. Process for the preparation of liquid-crystalline polyorganosiloxanes containing methacryloxy and/or acryloxy groups by reaction of polyorganosiloxanes containing hydrogen atoms in each case bonded directly to silicon atoms with alkenes and/or alkynes containing mesogenic groups, the polyorganosiloxanes mentioned

   being reacted in a first step with alkene and/or alkyne containing mesogenic groups and
   being reacted in a second step with an alkene and/or alkyne containing at least one methacryloxy and/or acryloxy group and mesogenic groups, the alkenes employed in the first step having no methacryloxy and/or acryloxy group other than the alkene group which can be in the form of a methacryloxy and/or acryloxy group, and the alkynes employed in the first step having no methacryloxy and/or acyloxy group.

2. Process according to Claim 1, wherein the polyorganosiloxanes containing hydrogen atoms bonded directly to silicon atoms employed are those which are built up from at least three units of the general formula (I)

$$[R_pH_qSiO_{(4-p-q)/2}] \quad (I),$$

   in which

   R is identical or different, $C_1$- to $C_{18}$-hydrocarbon radicals optionally substituted by halogen atoms or cyano groups,
   p is an integer having a value from 0 to 3 and an average value from 0.8 to 2.2,
   q is an integer having a value from 0 to 3, with an average value which is such that at least one and on average at least two hydrogen atoms bonded directly to silicon atoms are present per molecule, and the sum of p and q is not more than 3.

3. Process according to Claim 1, wherein the alkenes and alkynes containing mesogenic groups employed in the first step are those of the general formula (VI)

$$B\text{-}(X^1{}_a\text{-}A^1{}_b\text{-}A^2{}_c)_d\text{-}Z_e\text{-}(\text{-}X^2{}_f\text{-}A^3{}_g\text{-}A^4{}_h\text{-})_i\text{-}A^5 \quad (VI),$$

   in which

| | |
|---|---|
| B | is a monovalent hydrocarbon radical of the general formula $C_nH_m$ which is optionally substituted by halogen atoms and in which one or more non-adjacent methylene units can be replaced by oxygen atoms, |
| n | is an integer having a value from 2 to 20, |
| m | is an integer having the value (2n-1) or (2n-3), |
| $X^1$ and $X^2$ | are identical or different divalent radicals from the group consisting of -O-, -COO-, -CONH-, -CO-, -S-, -C≡C-, -CH=CH-, $-CH_2-CH_2-$, -CH=N, -N=N- and -N=N(O)-, |
| $A^1$, $A^2$, $A^3$ and $A^4$ | are identical or different divalent radicals, that is to say 1,4-phenylene or 1,4-cyclohexylene radicals, substituted arylenes having 6 to 18 carbon atoms, substituted cycloalkylenes having 6 to 18 carbon atoms and heteroarylenes having 4 to 10 carbon atoms, |
| Z | is identical or different di- to tetravalent benzene-1,4-cyclohexane or 1,3-cyclopentane radicals, |
| $A^5$ | is identical or different, saturated or olefinically unsaturated alkyl, alkoxy or cycloalkyl radicals, having in each case 1 to 16 carbon atoms, steroid radicals, halogen atoms, hydrogen atoms, hydroxyl, nitrile and trialkylsiloxy groups, the particular alkyl radicals of which have 1 to 8 carbon atoms, |
| a, b, c, d, f, g, h and i | in each case independently of one another are identical or different integers having a value of 0, 1, 2 or 3, the sum of a+b+c+d+e+f+g+h+i is at least 2 and the sum of d and i is not more than 4, and |
| e | is a number having the value 0 or 1. |

**4.** Process according to Claim 1, wherein the alkenes and alkynes containing a methacryloxy or acryloxy group and mesogenic groups employed in the second step are those of the general formula (IX)

$$B\text{-}(X^1{}_a\text{-}A^1{}_b\text{-}A^2{}_c)_d\text{-}Z_e\text{-}(\text{-}X^2{}_f\text{-}A^3{}_g\text{-}A^4{}_h\text{-})_i\text{-}R^1 \quad \text{(IX)},$$

in which

B, $X^1$, $X^2$, Z, $A^1$, $A^2$, $A^3$, $A^4$, a, b, c, d, e, f, g, h and i have the meanings given for the general formula (VI) and $R^1$ is a radical of the general formula (X)

$$\text{-}(CH_2)_t\text{-}O\text{-}CO\text{-}CQ\text{=}CH_2 \quad \text{(X)},$$

in which

Q is a methyl group or a hydrogen atom and
t is an integer having a value from 0 to 10, and one or more non-adjacent methylene units can be replaced by oxygen atoms.

**5.** Liquid-crystalline polyorganosiloxanes containing methacryloxy and/or acryloxy groups, which can be prepared by the process according to one of Claims 1, 2, 3 and 4.

**6.** Process for crosslinking liquid-crystalline polyorganosiloxanes according to Claim 5 by UV light in the presence of photoinitiators and/or photosensitizers.

**7.** Three-dimensionally crosslinked liquid-crystalline polyorganosiloxanes which can be prepared by the process according to Claim 6.

**8.** Use of the polyorganosiloxanes according to Claim 7 for the production of membranes for separating mixtures of substances, for controlled release of active compounds, for optical display of electromagnetic fields, in the field of information storage, of electrographic processes and of light modulation, as a constituent of polarization films, optical filters or reflectors, in coatings, and as coating pigments and stationary phases for gas and liquid chromatography.

## Revendications

**1.** Procédé de préparation de polyorganosiloxanes cristallins à l'état liquide présentant des groupements méthacryloxy et/ou acryloxy par transformation de polyorganosiloxanes avec chaque fois des atomes d'hydrogène directement liés à des atomes de silicium avec des alcènes et/ou des alcynes présentant des groupements mésogènes, les polyorganosiloxanes cités étant transformés dans une première étape avec un alcène et/ou un alcyne présentant des groupements mésogènes et étant transformés, dans une deuxième étape, avec un alcène et/ou alcyne présentant au moins un groupement méthacryloxy et/ou acryloxy et des groupements mésogènes, les alcènes utilisés dans la première étape ne présentant pas, aux côtés du groupement alcène, qui peut se trouver sous forme d'un groupement méthacryloxy et/ou acryloxy, de groupement méthacryloxy et/ou acryloxy, et les alcynes utilisées dans la première étape ne présentant pas de groupement méthacryloxy et/ou acryloxy.

**2.** Procédé suivant la revendication 1, dans lequel on utilise comme polyorganosiloxanes avec des atomes d'hydrogène directement liés à des atomes de silicium ceux qui sont constitués d'au moins trois des unités de formule générale (I)

$$[R_pH_qSiO_{(4-p-q)/2}] \quad \text{(I)},$$

dans laquelle

R représente des radicaux hydrocarbonés en $C_1$-$C_{18}$ identiques ou différents, le cas échéant substitués par des atomes d'halogène ou des groupements cyano,
p est un nombre entier d'une valeur de 0 à 3 et d'une valeur moyenne de 0,8 à 2,2,
q est un nombre entier d'une valeur de 0 à 3 avec une valeur moyenne qui est mesurée de sorte qu'au moins un, et en moyenne au moins deux atomes d'hydrogène par molécule sont directement liés à des atomes de silicium,

et la somme de **p** et **q** vaut au maximum 3.

**3.** Procédé suivant la revendication 1, dans lequel on utilise, comme alcènes et alcynes présentant des groupements mésogènes utilisés dans la première étape, ceux de formule générale (VI)

$$B\text{-}(X^1{}_a\text{-}A^1{}_b\text{-}A^2{}_c)_d\text{-}Z_e\text{-}(\text{-}X^2{}_f\text{-}A^3{}_g\text{-}A^4{}_h\text{-})_i\text{-}A^5 \qquad (VI),$$

dans laquelle

B représente un radical hydrocarboné monovalent de formule générale $C_nH_m$ le cas échéant substitué par des atomes d'halogène, dans lequel une ou plusieurs unités méthylène non voisines peuvent être remplacées par des atomes d'oxygène,
n signifie un nombre entier d'une valeur de 2 à 20,
m signifie un nombre entier avec la valeur de (2n-1) ou (2n-3),
$X^1$ et $X^2$ signifient des radicaux divalents, identiques ou différents parmi les groupements -O-, -COO-, -CONH-, -CO-, -S-, -C≡C-, -CH=CH-, $-CH_2-CH_2-$, -CH=N-, -N=N- et -N=N(O)-,
$A^1$, $A^2$, $A^3$ et $A^4$ signifient des radicaux divalents, identiques ou différents, à savoir, des radicaux 1,4-phénylène, 1,4-cyclohexylène, des arylènes substitués avec 6 à 18 atomes de carbone, des cycloalkylènes substitués avec 6 à 18 atomes de carbone et des hétéroarylènes avec 4 à 10 atomes de carbone,
Z signifie des radicaux divalents à tetravalents, identiques ou différents benzène, 1,4-cyclohexane ou 1,3-cyclopentane,
$A^5$ signifie des radicaux alkyle, alcoxy ou cycloalkyle identiques ou différents, saturés ou oléfiniquement insaturés avec chaque fois 1 à 16 atomes de carbone, des radicaux stéroïdes, des atomes d'halogène, des atomes d'hydrogène, des groupements hydroxyle, nitrile et trialkylsiloxy, dont chacun des radicaux alkyle possède 1 à 8 atomes de carbone,
a, b, c, d, f, g, h et i signifient chaque fois indépendamment l'un de l'autre des nombres entiers identiques ou différents d'une valeur de 0, 1, 2 ou 3, la somme a+b+c+d+e+f+g+h+i vaut au moins 2 et la somme de d et i vaut au maximum 4, et
e signifie un nombre à valeur de 0 ou 1.

**4.** Procédé suivant la revendication 1, dans lequel on utilise comme alcènes et alcynes présentant un groupement méthacryloxy ou acryloxy et des groupements mésogènes utilisés dans la deuxième étape, ceux de formule générale (IX)

$$B\text{-}(X^1{}_a\text{-}A^1{}_b\text{-}A^2{}_c)_d\text{-}Z_e\text{-}(\text{-}X^2{}_f\text{-}A^3{}_g\text{-}A^4{}_h\text{-})_i\text{-}R^1 \qquad (IX),$$

dans laquelle

B, $X^1$, $X^2$, Z, $A^1$, $A^2$, $A^3$, $A^4$, a, b, c, d, e, f, g, h et i ont les significations données pour la formule générale (VI) et
$R^1$ signifie un radical de formule générale (X)

$$-(CH_2)_t\text{-}O\text{-}CO\text{-}CQ{=}CH_2 \qquad (X),$$

dans laquelle

Q signifie un groupement méthyle ou un atome d'hydrogène, et
t signifie un nombre entier avec la valeur de 0 à 10, et une ou plusieurs unités de méthylène non voisines peuvent être remplacées par des atomes d'oxygène.

**5.** Polyorganosiloxanes cristallins à l'état liquide présentant des groupements méthacryloxy et/ou acryloxy, pouvant être préparés suivant le procédé suivant l'une des revendications 1, 2, 3 ou 4.

**6.** Procédé pour la réticulation de polyorganosiloxanes cristallins à l'état liquide suivant la revendication 5, en présence de photoinitiateurs et/ou de photosensibilisateurs par la lumière UV.

**7.** Polyorganosiloxanes cristallins à l'état liquide réticulés de manière tridimensionnelle, pouvant être préparés suivant le procédé suivant la revendication 6.

**8.** Utilisation des polyorganosiloxanes suivant la revendication 7, pour la préparation de membranes pour la séparation de mélanges de matières, pour la libération visée de substances actives, pour l'indication optique de champs électromagnétiques, dans le domaine de la mémorisation d'informations, des procédés électrographiques, de la modulation de lumière, comme constituant de feuilles de polarisation, de filtres optiques, de réflecteurs, dans les revêtements, comme pigments de laque et phases stationnaires pour la chromatographie en phase gazeuse et liquide.